(19) Europäisches Patentamt / European Patent Office / Office européen des brevets

(11) **EP 3 233 691 B1**

(12) **EUROPÄISCHE PATENTSCHRIFT**

(45) Veröffentlichungstag und Bekanntmachung des Hinweises auf die Patenterteilung:
**17.10.2018  Patentblatt 2018/42**

(21) Anmeldenummer: **15808409.5**

(22) Anmeldetag: **14.12.2015**

(51) Int Cl.:
**B66B 1/34** *(2006.01)*

(86) Internationale Anmeldenummer:
**PCT/EP2015/079553**

(87) Internationale Veröffentlichungsnummer:
**WO 2016/096697 (23.06.2016 Gazette 2016/25)**

(54) **POSITIONSERMITTLUNGSSYSTEM FÜR EINEN AUFZUG**

POSITIONING SYSTEM FOR AN ELEVATOR

SYSTÈME DE DÉTERMINATION DE POSITION POUR UN ASCENSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2014  EP 14198352**

(43) Veröffentlichungstag der Anmeldung:
**25.10.2017  Patentblatt 2017/43**

(73) Patentinhaber: **Inventio AG**
**6052 Hergiswil (CH)**

(72) Erfinder:
• **BITZI, Raphael**
  **6006 Luzern (CH)**
• **SCHERRER, Daniel**
  **8052 Zürich (CH)**
• **BROSSI, Steven**
  **8047 Zürich (CH)**

(56) Entgegenhaltungen:
**EP-A1- 1 232 988      WO-A1-2006/073015**
**DE-A1- 10 141 412**

**Beschreibung**

Die Erfindung betrifft das Gebiet der Bestimmung einer Position, insbesondere einer Absolutposition einer Aufzugskabine mittels der Auswertung einer Oberflächenstruktur von Schachtmaterial, insbesondere betrifft die Erfindung ein Positionsermittlungssystem für einen Aufzug, das aufgrund einer Oberflächenstruktur von Schachtmaterial eine Position ermittelt.

Die Patentoffenbarung EP 1 232 988 A1 zeigt eine Aufzugsanlage mit einem Positionsermittlungssystem zur Ermittlung einer Position einer Aufzugskabine. Dieses Positionsermittlungssystem umfasst eine Kamera, die an der Aufzugskabine angeordnet ist und dazu verwendet wird, Bilder von Schachtmaterial bzw. der Oberflächenstruktur dieses Schachtmaterials zu erzeugen. Als Schachtmaterial werden sowohl Führungsschienen und weitere Aufzugskomponenten gesehen, die im Schacht angeordnet sind, als auch die den Schacht begrenzenden Schachtwände. Das Schachtmaterial, bildet in seiner Gesamtheit eine Oberflächenstruktur, die sich im Wesentlichen entlang des Fahrtwegs der Aufzugskabine erstreckt. Diese Oberflächenstruktur verändert sich fortlaufend, so dass jedes erzeugte Bild der Oberflächenstruktur einzigartig ist und als Indikator für eine Position der Aufzugskabine dienen kann. Bei einer Lernfahrt erzeugt die Kamera Referenzbilder der Oberflächenstruktur. Eine mit der Kamera verbundene Auswerteeinheit ordnet diesen Referenzbildern eine Position im Schacht zu und legt die Referenzbilder sowie die zugeordneten Positionswerte auf ein Speichermedium ab. Im Normalbetrieb kann nun aufgrund eines Vergleichs der fortlaufend von der Kamera erzeugten Bilder mit den hinterlegten Referenzbildern eine Position der Aufzugskabine von der Auswerteeinheit ermittelt werden.

Für die Robustheit der Ermittlung der Position erweisen sich Vibrationen an der Aufzugskabine als besonders kritisch. Die Vibrationen wirken sich beispielsweise negativ auf das Einhalten eines konstanten Abstands zwischen der Kamera und der Oberflächenstruktur aus. Denn ein von der Kamera aufgenommenes Objekt erscheint bei näherem Abstand grösser als bei einem weiteren Abstand. Diese Varianz im Abstand zur Oberflächenstruktur stellt die Auswerteeinheit bei der Bestimmung der Position vor besondere Herausforderungen, da beispielsweise die Grösse der Referenzbilder nicht mit denjenigen der fortlaufen erzeugten Bilder übereinstimmt und dadurch eine eindeutige Zuweisung der Referenzbilder erschwert wird. Zudem kann bei einem Variablen Abstand zwischen der Kamera und der Oberflächenstruktur aufgrund der bildweise erkannten Muster nicht auf die realen Abmessungen des Musters geschlossen werden. Die Patentveröffentlichung EP 1 232 988 A1 gibt hierzu keine Lösungsvorschläge.

Es ist daher eine Aufgabe der Erfindung, die Robustheit eines solchen Positionsermittlungssystems zu erhöhen.

Diese Aufgabe wird erfindungsgemäss durch ein Positionsermittlungssystem für einen Aufzug gelöst, das eine Kamera und eine Auswerteeinheit aufweist. Hierbei ist die Kamera an einer Aufzugskabine angeordnet. Desweiteren umfasst die Kamera einen Sensor mit einer definierten Anzahl von lichtempfindlichen Pixeln. Mittels dieses Sensors erzeugt die Kamera Bilddaten einer Oberflächenstruktur von Schachtmaterial, das entlang eines Fahrwegs der Aufzugskabine angeordnet ist. Die Auswerteeinheit ermittelt aufgrund der Bilddaten eine Position und/oder Geschwindigkeit der Aufzugskabine. Die Lösung zeichnet sich dadurch aus, dass das Positionsermittlungssystem dazu ausgelegt ist, ein im Aufnahmebereich der Kamera liegendes Referenzmuster mit einer vorgegebenen Dimension zu erkennen, wobei die Auswerteeinheit aufgrund des Referenzmusters eine Kalibrierung des Sensors vornimmt.

In der Folge soll bei Gebrauch des Ausdrucks Position sinngemäss auch eine Geschwindigkeit der Aufzugskabine miteinschliessen, die aus den Werten der Position ableitbar ist.

Unter Kalibrierung des Sensors wird hier die Bestimmung einer Abmessung eines durch den Sensor bildweise festgehaltenen Musters der Oberflächenstruktur verstanden. Die Ermittlung der Kabinenposition ist in hohem Masse von der exakten Bestimmung der Abmessungen eines vom Sensor erfassten Musters abhängig. Die Kalibrierung kann hierbei sehr einfach in Bezug auf ein im Aufnahmebereich der Kamera vorhandenes Referenzmuster mit vorgegebenen Dimensionen vorgenommen werden.

Ein von der Kamera aufgenommenes Muster erscheint im Bild der Kamera bei näherem Abstand zur Oberflächenstruktur grösser als bei einem weiteren Abstand zur Oberflächenstruktur. Somit kann aufgrund der bildweise erkannten Muster nicht ohne weiteres auf die realen Abmessungen des Musters geschlossen werden. Hier schafft das Referenzmuster Abhilfe, da das Referenzmuster in gleichem Masse wie das Muster einer Grössenänderung im Bild in Abhängigkeit des Abstands unterworfen ist. Dank des Referenzmusters kann das Muster in Relation zu einer vorgegebenen Dimension des Referenzmusters gesetzt werden. Bei der Kalibrierung mittels des Referenzmusters ist also eine Abmessung eines Musters ungeachtet des Abstands zwischen der Kamera und der Oberflächenstruktur möglich. Die Kalibrierung im Sinne der vorliegenden Erfindung kann insbesondere auch eine Skalierung des in den Bilddaten enthaltenen Musters mittels des Referenzmusters umfassen.

Der Begriff Kamera soll hier breit gefasst sein und alle bilderfassenden Systeme umfassen, die eine Oberflächenstruktur darstellen können, und soll neben herkömmlichen Kameras auch beispielsweise Infrarotkameras, Scanner, Röntgenaufnahmegeräte, Ultraschallbilderzeugungssysteme und dergleichen umfassen.

Die Oberflächenstruktur wird durch die Gesamtheit des in einem Schacht installierten Schachtmaterials gebildet, das bezüglich des Schachts ortsfest angeordnet ist. Das Schachtmaterial soll hier sowohl Aufzugskomponenten wie beispielsweise Führungsschienen, Schachttüren als auch die den Schacht begrenzenden Schachtwände umfassen. Das Schachtmaterial besitzt Oberflächen mit einer sich fortlaufend über die Höhe des Schachts ändernden Charakteristik mit Blick auf die Textur, die Rauheit, die Farbe, Muster, die Form, und/oder die Kontur. Diese zusammengesetzte Oberfläche mit der ihr eigenen Charakteristik wird hier als Oberflächenstruktur verstanden. Die Oberflächenstruktur bildet also über die Höhe des Schachts einen sich fortlaufend ändernden sich nicht wiederholenden Code, der bildweise auswertbar ist. Anhand von Referenzbildern, die in einer Lernfahrt aufgenommen werden und denen eine Position im Schacht zugeordnet wird, kann durch einen Bildvergleich von fortlaufend aufgenommenen Bildern mit eben diesen Referenzbildern zu jedem Zeitpunkt eine Position der Aufzugskabine ermittelt werden.

Unter einem Aufnahmebereich der Kamera wird hier der Bereich auf der Oberflächenstruktur verstanden, der zu einem gewissen Zeitpunkt im Blickfeld der Kamera ist und den die Kamera aufnehmen kann. Der Aufnahmebereich ist der grösstmögliche Bereich der von der Kamera zu einem gewissen Zeitpunkt erfassbar ist.

Unter Referenzmuster wird hier vorzugsweise ein Muster mit vorgebbaren im Wesentlichen gleichbleibenden Dimensionen verstanden. Das Referenzmuster gibt also einen Vergleichswert vor, der für die Kalibrierung des Sensors herangeführt wird. Als Referenzmuster eignen sich grundsätzlich alle Muster, die bildweise von der Kamera erkennbar und durch die Auswerteeinheit auswertbar sind. Dies betrifft beispielsweise Kreise mit einem vorgegebenen Durchmesser als Dimension, Vielecke mit einer vorgegebenen Höhe oder Breite, mindestens zwei Punkte mit einem vorgegebenen Abstand, oder einen vorgegebenen zweidimensionalen Matrixcode, um einige einfache Beispiele zu nennen.

Als Sensor für die Kamera eignen sich beispielsweise ein Sensor der Bauart CCD (charge-coupled device) oder CMOS (complementary metal-oxide-semiconductor) mit einer Matrix von lichtempfindlichen Pixeln.

Vorzugsweise setzt die Auswerteeinheit für die Kalibrierung des Sensors die vorgegebene Dimension des Musters ins Verhältnis zur Anzahl Pixel, die diese Dimension bildweise umsetzt. Hierbei ist die Grösse eines vom Sensor aufgenommenen Objekts auf einfache Weise unabhängig vom Abstand der Kamera zur Oberflächenstruktur bestimmbar.

Besonders vorteilhaft ist eine Auswertung der Pixel, die eine Dimension bildweise umsetzen, mit einer Auswertgenauigkeit, die über die Pixelauflösung hinausgeht. Eine solche Auswertung wird unter dem Begriff Subpixelgenauigkeit zusammengefasst. Bei einer solchen Auswertung wird beispielsweise ein Schwerpunkt oder eine Kante eines im Referenzmuster enthaltenen Musters bestimmt und für die Kalibrierung des Sensors als Referenzwert verwendet. Bei der Kalibrierung können auch mehrere dieser Referenzwerte verwendet werden. Entsprechend umfasst die zuvor erwähnte Anzahl Pixel nicht nur ganzzahlige Werte sondern möglicherweise auch einen sich in der Auswertung ergebenden Bruchteil eines Pixels.

Vorzugsweise sind die erzeugten Bilddaten bei der Ermittlung der Position und/oder Geschwindigkeit mittels des aus der Kalibrierung gewonnen Verhältnisses skalierbar. Dabei ist es vorteilhaft, dass die bei der Ermittlung der Positionswerte und/oder Geschwindigkeitswerte anhaftenden Fehler, die auf die Varianz des Abstands der Kamera zur Oberflächenstruktur zurückgehen, mittels der Kalibrierung bzw. Skalierung korrigierbar sind. Hierbei ist eine kontinuierliche Korrektur der erzeugten Bilddaten erzielbar.

Vorzugsweise besitzt die Kamera einen einstellbaren Auswertebereich. Im Auswertebereich sind Bilddaten erzeugbar die von der Auswerteeinheit ausgewertet werden. Der Auswertebereich liegt im Aufnahmebereich und ist vorzugsweise kleiner einstellbar als der Aufnahmebereich, wobei das Referenzmuster innerhalb des Auswertbereichs liegt. In einer alternativen Ausführung kann der Auswertebereich auch den gesamten Aufnahmebereich beanspruchen.

Unter Auswertebereich wird ein Unterbereich des Aufnahmebereichs verstanden, in dem Bilddaten von der Auswerteeinheit für eine Auswertung berücksichtigt werden. Dies betrifft über die Auswertung des Referenzmusters für Kalibrierungszwecke hinaus auch die Auswertung von Bilddaten für die Ermittlung der Position der Aufzugskabine. Dank der Festlegung eines Auswertebereichs kann die Rechenkapazität der Auswerteeinheit relativ klein gehalten werden, da nur eine reduzierte Anzahl der Pixel für eine Bildauswertung berücksichtigt werden muss. Zudem können Randeffekte des Sensors, die sich negativ auf die Auswertung der Bilddaten auswirken können, minimiert werden.

Vorzugsweise besitzt die Kamera einen einstellbaren Positionsermittlungsbereich, in dem Bilddaten aufnehmbar sind, aufgrund derer die Auswerteeinheit die Position der Aufzugskabine ermittelt, insbesondere mittels eines Vergleichs der aufgenommenen Bilddaten mit Bilddaten eines einer Position im Schacht zugewiesenen Referenzbilds, der im Auswertebereich liegt und der insbesondere kleiner einstellbar ist als der Auswertebereich

Unter Positionsermittlungsbereich wird ein Unterbereich des Auswertebereichs verstanden, in dem die vom Sensor erzeugten Bilddaten für den Vergleich mit den Bilddaten der hinterlegten Referenzbilder herangezogen werden. Der Vorteil im Auswertebereich einen weiteren Unterbereich, nämlich den Positionsermittlungsbereich, zu definieren, liegt in der Zuweisbarkeit einer eigens für diesen Bereich vorgesehenen Funktionserfüllung, wie weiter unten anhand eines Beispiels verdeutlicht wird.

Vorzugsweise umfasst das Positionsermittlungssystem eine Lichtquelle, die ein Referenzmuster auf der Oberflächenstruktur erzeugt. Dabei liegt das Referenzmuster in einem Aufnahmebereich der Kamera.

Vorzugsweise umfasst das Referenzmuster mindestens zwei Lichtpunkte, die in einer vorgegebenen Dimension, insbesondere einem Abstand, zueinander auf der Oberflächenstruktur erzeugbar sind. Dabei nimmt die Auswerteeinheit aufgrund des Abstands der zwei Lichtpunkte eine Kalibrierung des Sensors vor.

Vorzugsweise sind die beiden Lichtpunkte vertikal versetzt, insbesondere vertikal fluchtend, auf der Oberflächenstruktur erzeugbar. Durch den vertikalen Versatz der beiden Lichtpunkte ist die Kalibrierung des Sensors in vertikaler Richtung gewährleistet. Die Kalibrierung des Sensors in die vertikale Richtung ist besonders wichtig für eine zuverlässige Positionsbestimmung der Aufzugskabine in Verfahrrichtung. Alternativ ist es aber durchaus denkbar, die Lichtpunkte horizontal versetzt auf der Oberflächenstruktur zu erzeugen, insbesondere dann wenn ein Pixelabstand in vertikaler Richtung dem Pixelabstand in horizontaler Richtung entspricht oder in einem, fest vorgegebenen Grössenverhältnis steht.

Vorzugsweise liegen die zwei Lichtpunkte ausserhalb des Positionsermittlungsbereichs. Insbesondere liegt ein oberer Lichtpunkt oberhalb des Positionsermittlungsbereichs und ein unterer Lichtpunkt unterhalb des Positionsermittlungsbereichs. Hierbei ist es vorteilhaft, dass die Auswertung der Lichtpunkte und die Auswertung der Bilddaten der Oberflächenstruktur in unterschiedlichen Bereichen des Auswertebereichs erfolgen. Somit kann die Kalibrierung und die Positionsbestimmung gleichzeitig erfolgen, ohne dass die Lichtpunkte die Positionsbestimmung beeinflussen.

Vorzugsweise umfasst die Lichtquelle eine erste und eine zweite Laserdiode. Die erste Laserdiode emittiert einen ersten Laserstrahl und die zweite Laserdiode einen zweiten Laserstrahl. Hierbei erzeugt der erste Laserstrahl den ersten Lichtpunkt und der zweite Laserstrahl den zweiten Lichtpunkt auf der Oberflächenstruktur.

Vorzugsweise sind der erste Laserstrahl und der zweite Laserstrahl parallel zueinander ausgerichtet. Dank der parallelen Ausrichtung der beiden Laserstrahlen bleibt der Abstand der durch die Laserstrahlen erzeugten Lichtpunkte auch bei variablem Abstand zwischen der Kamera und der Oberflächenstruktur konstant. Somit kann eine besonders zuverlässige Kalibrierung des Sensors bzw. der Pixelgrösse auch bei grösseren Vibrationen des Abstands zwischen der Kamera und der Oberflächenstruktur erfolgen. Vorzugsweise sind die erste und die zweite Laserdiode, der Sensor und/oder ein Objektiv der Kamera auf einer Platine des Sensors integriert. Dabei ist es besonders vorteilhaft, dass durch die integrale Bauweise des Sensors eine möglichst kostengünstige und kompakte Bauweise der Kamera erzielt werden kann.

Alternativ zu einer Lichtquelle, die ein Referenzmuster auf der Oberflächenstruktur erzeugt, kann vorzugsweise das Referenzmuster mittels eines Referenzobjekts, das auf der Oberflächenstruktur angeordnet ist, erzeugbar sein. Dabei liegt das Referenzobjekt zumindest zeitweise im Aufnahmebereich der Kamera. Es können auch mehrere Referenzobjekte entlang des Verfahrwegs der Aufzugskabine auf der Oberflächenstruktur vorgesehen sein, um eine Kalibrierung des Sensors in regelmässigen Zeitabständen zu gewährleisten.

Vorzugsweise nimmt das Referenzobjekt eine der folgenden Ausgestaltung an, nämlich einen Schraubenkopf, ein Schienenbefestigungselement oder eine Codemarke. Hierbei ist es besonders vorteilhaft eine oder mehrere Komponenten wie beispielsweise einen Kopf einer Schraube als Referenzobjekt zu nutzen, die ohnehin schon zur Befestigung einer Führungsschiene vorgesehen sind. Somit kann auf zusätzliche Referenzobjekte verzichtet werden.

In einem weiteren Aspekt betrifft die Lösung einen Aufzug mit einem oben beschriebenen Positionsermittlungssystem. Hierbei übermittelt die Auswerteeinheit Positionsdaten der Aufzugskabine an die Aufzugssteuerung. Schliesslich steuert die Aufzugssteuerung unter Verwendung der Positionsdaten eine Antriebseinheit an, um die Aufzugskabine zu verfahren.

Bevorzugte Ausführungsbeispiele der Erfindung sind in der nachfolgenden Beschreibung anhand der beigefügten Figuren näher erläutert. Es zeigen:

Fig. 1      eine exemplarische Ausgestaltung einer Aufzugsanlage in einer stark vereinfachten schematischen Darstellung mit einem Positionsermittlungssystem und eine funktionale Darstellung der Positionsermittlung;

Fig. 2      einen Ausschnitt des Positionsermittlungssystems in einer stark vereinfachten schematischen Darstellung mit einer funktionalen Darstellung der Kalibrierung mittels zwei Lichtpunkten;

Fig. 3      einen exemplarische Ausgestaltung eines Sensors der Kamera in einer stark vereinfachten schematischen Darstellung und die Veranschaulichung der Kalibrierung mittels zwei Lichtpunkten;

Fig. 4      einen Ausschnitt des Positionsermittlungssystems in einer stark vereinfachten schematischen Darstellung mit einer funktionalen Darstellung der Kalibrierung mittels eines Objekts; und

Fig. 5      einen exemplarische Ausgestaltung eines Sensors der Kamera in einer stark vereinfachten schematischen Darstellung und die Veranschaulichung der Kalibrierung mittels eines Referenzobjekts.

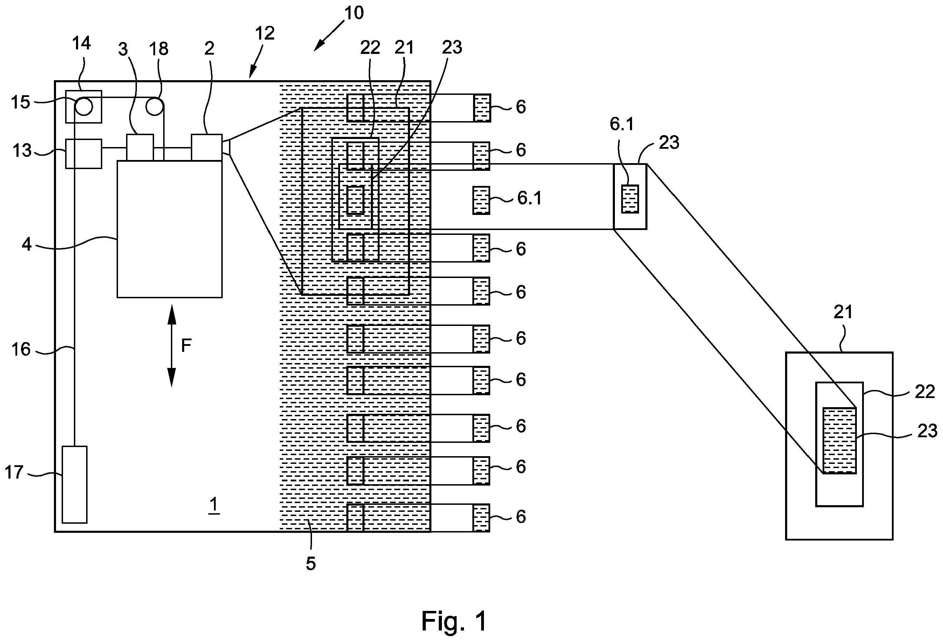

Die Fig. 1 zeigt einen Aufzug 10 mit einer Aufzugskabine 4, die in einem Schacht 1 entlang von Führungsschienen (nicht gezeigt) bzw. eines Verfahrwegs F verfahrbar ist. Die Aufzugskabine 4 ist an einem ersten Ende eines Tragmittels 16 in einem Aufhängungsverhältnis von 1:1 aufgehängt. Selbstredend kann der Fachmann auch ein davon abweichendes Aufhängungsverhältnis von 2:1 oder höher auswählen. Zum Ausgleich der Gewichtskraft der Aufzugskabine 4 ist ein Gegengewicht 17 vorgesehen, das an einem zweiten Ende des Tragmittels 16 aufgehängt ist.

Zudem ist eine Antriebseinheit vorgesehen, die zumindest eine Antriebsmaschine 14 und eine von der Antriebsmaschine 14 angetriebene Treibscheibe 15 umfasst. Das Tragmittel 16 läuft über die Treibscheibe 15 und ist mit dieser wirkverbunden, so dass ein Antriebsmoment der Antriebsmaschine 14 über die Treibscheibe 15 auf das Tragmittel 16 übertragbar ist. Zudem läuft das Tragmittel 10 über eine Umlenkrolle 18.

Desweiteren umfasst der Aufzug 10 eine Kamera 2, die an der Aufzugskabine 4 angeordnet ist. Die Kamera 2 ist Teil eines Positionsermittlungssystems 12 und erzeugt Bilder der Oberflächenstruktur 5 von Schachtmaterial. In der Fig.1 ist die Oberflächenstruktur geriffelt angedeutet.

In einer Lernfahrt nimmt die Kamera 2 Referenzbilder 6 der Oberflächenstruktur 5 auf, die in einem nicht dargestellten Speichermedium hinterlegt werden. In der Fig. 1 ist aus Anschaulichkeitsgründen ein gewisser Abstand zwischen den Referenzbildern 6 vorgesehen. Die Bildwiederholungsfrequenz bei der Aufnahme der Referenzbilder 6 kann aber auch so hoch eingestellt werden, dass benachbarte Referenzbilder 6 unmittelbar aneinander anschliessen oder einen Überlappungsbereich aufweisen. Hierbei kann auch ein durchgehendes Referenzbild aufgenommen werden und auf dem Speichermedium hinterlegt wird. Bei einer Fahrt während des Normalbetriebs des Aufzugs 10 erzeugt die Kamera 2 fortlaufend Bilder der Oberflächenstruktur 5. Diese Bilder werden in einer Auswerteeinheit 3 ausgewertet. Diese Auswertung beinhaltet einen Vergleich zwischen den zuvor hinterlegten Referenzbildern 6, die einer Position im Schacht 1 zugeordnet sind, mit den fortlaufend bei der Fahrt der Aufzugskabine 4 erzeugten Bildern. Hierbei ermittelt die Auswerteeinheit 3 eine Position der Aufzugskabine 4. Die Auswerteeinheit 3 stellt diese Position der Aufzugssteuerung 13 zur Verfügung, wobei die Aufzugssteuerung 13 unter Verwendung der Positionsdaten die Antriebseinheit ansteuert, um die Aufzugskabine 4 in Verfahrrichtung F zu verfahren

In der Fig. 1 ist der Aufnahmebereich 21 der Kamera 2 exemplarisch auf eine den Schacht 1 begrenzende Schachtwand gerichtet. Der Aufnahmebereich 21 ist der grösstmögliche Bereich der von der Kamera 2 erfassbar ist. Dementsprechend erzeugt die Kamera 2 Bilddaten der Oberflächenstruktur 5 der Schachtwand, die zumindest teilweise von der Auswerteeinheit 3 ausgewertet werden. Denn um Randeffekte zu minimieren und um die Rechenleistung der Auswerteeinheit 3 in Grenzen zu halten, verfügt die Kamera 2 über einen vorgebbaren Auswertebereich 22. Die im Auswertebereich 22 enthaltenen Bilddaten werden einer Auswertung in der Auswerteeinheit 3 unterworfen. Im gezeigten Ausführungsbeispiel verfügt die Kamera 2 zudem über einen Positionsermittlungsbereich 23. Im Abbild der Oberflächenstruktur 5, das im Positionsermittlungsbereich 23 liegt, wird nach einer Übereinstimmung mit einem der abgelegten Referenzbildern 6 gesucht.

In Fig. 1 wird exemplarisch anhand eines Referenzbilds 6.1 aufgezeigt, wie die Bildauswertung der von der Kamera 2 zur Verfügung gestellten Bilddaten in der Auswerteeinheit 3 erfolgt. Die Kamera 2 nimmt fortlaufen Bilder der Oberflächenstruktur 5 auf, wobei hier, wie rechts unten in Fig. 1 angedeutet nur die Bilddaten, die im Positionsermittlungsbereich 23 liegen, der Auswerteeinheit 3 für eine Auswertung zugeführt werden. In einem weiteren Schritt wird in den Bilddaten des Positionsermittlungsbereichs 23 nach einer Übereinstimmung mit einem Referenzbild 6.1 gesucht und bei Übereinstimmung auf die Position der Aufzugskabine 4 geschlossen.

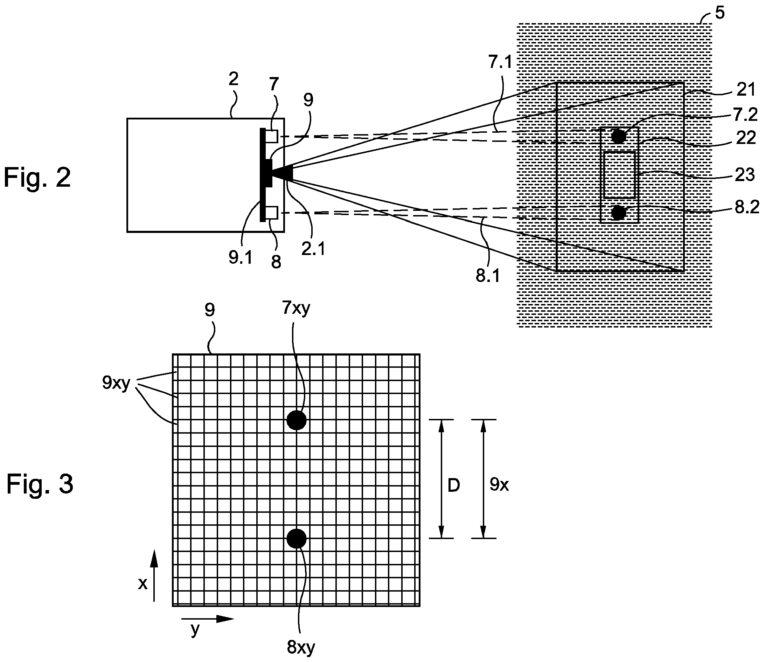

Die Fig. 2 zeigt in einer stark schematisierten Darstellung ein Ausführungsbeispiel einer Kamera 2, die mittels Laserdioden 7, 8 eine Kalibrierung des Sensors 9 bzw. der Pixelgrösse des Sensors 9 vornimmt.

Die Kamera 2 umfasst ein Objektiv 2.1, einen lichtempfindlichen Sensor 9 und zwei Laserdioden 7, 8. Im gezeigten Beispiel sind die zuvor genannten Komponenten der Kamera 2 auf einer Platine 9.1 des Sensors 9 integriert. Selbstredend ist die Erfindung nicht auf diese Ausführungsform der Kamera 2 beschränkt, sondern umfasst alle Ausführungen von Kameras, die in einer geforderten Auslösung und in der geforderten Geschwindigkeit Bilddaten einer Oberflächenstruktur 5 erzeugen können und zudem dazu ausgelegt sind eine erfindungsgemässe Kalibrierung vornehmen zu können.

Im gezeigten Beispiel ist der Aufnahmebereich 21 der Kamera 2 auf eine Oberflächenstruktur 5 des Schachts 1 gerichtet. Die beiden Laserdioden 7, 8 erzeugen je einen Laserstrahl 7.1, 8.1, die im Auswertebereich 22 der Kamera 2 je einen Lichtpunkt 7.2, 8.2 als Referenzmuster erzeugen. Die beiden Lichtpunkte 7.2, 8.2 liegen jedoch ausserhalb des Positionsermittlungsbereichs 23. Schliesslich ist hier wie bereits im Beispiel nach Fig. 1 beschrieben ein Positionsermittlungsbereich 23 vorgesehen. Ein erster Lichtpunkt 7.2 liegt oberhalb und ein zweiter Lichtpunkt 8.2 liegt unterhalb des Positionsermittlungsbereichs 23. Hierdurch ergeben sich innerhalb des Auswertebereichs 22 auf ideale Weise zwei Bereiche, wobei ein erster Bereich Bilddaten zur Vornahme einer Kalibrierung und ein zweiter Bereich, der dem Positionsermittlungsbereich 23 entspricht, Bilddaten zur Bestimmung der Position erzeugt. Diese beiden Funktionen können dank der klaren Trennung kontinuierlich und unabhängig voneinander durchgeführt werden.

Die beiden von den Leuchtdioden 7, 8 erzeugten Laserstrahlen 7.1, 8.1 sind parallel zueinander ausgerichtet und leuchten im Wesentlichen senkrecht auf die Oberflächenstruktur 5. Dank dieser Vorkehrungen werden die beiden Lichtpunkte 7.2, 8.2 in einem konstanten Abstand auf der Oberflächenstruktur 5 abgebildet. Dies ermöglicht eine Kalibrierung der Pixel des Sensors 9 auch bei einem sich verändernden Abstand zwischen der Kamera 2 und der Oberflächenstruktur 5.

In Fig. 3 wird weiter vertieft, wie die Kalibrierung des Ausführungsbeispiels nach Fig. 2 ausgeführt wird. Die Fig. 3 zeigt den Sensor 9 in einer Draufsicht in einer stark vereinfachten Darstellung, ohne Berücksichtigung von Grössenverhältnissen und ungeachtet der zuvor vorgestellten Bereichsunterteilung. Der Fokus liegt im Aufzeigen des grundlegenden Prinzips der Kalibrierung. Der Sensor 9 weist eine Matrix von lichtempfindlichen Pixeln 9xy auf, die sich in die beiden Richtungen x und y erstreckt. Desweiteren sind in Fig. 3 zwei Abbilder der Lichtpunkte 7xy und 8xy auf dem Sensor 9 ersichtlich. Die beiden Lichtpunkte 7xy, 8xy sind in einem vorgegebenen, der Auswerteeinheit 3 (in Fig. 3 nicht gezeigt) bekanntem Abstand D beabstandet. Zur Kalibrierung der Grösse der Pixel 9xy setzt die Auswerteeinheit den Abstand D ins Verhältnis mit der Anzahl Pixel 9xy, hier exemplarisch neun an der Zahl, die zwischen den beiden Lichtpunkten 7xy, 8xy liegen. Daher ergibt im vorliegenden Beispiel die Kalibrierung ein Verhältnis V zwischen dem Abstand D und der Anzahl Pixel 9xy, die den Abstand D bildweise umsetzt, von

$$V = D/9x$$

Die eingangs erwähnte Subpixelgenauigkeit kann in diesem Ausführungsbeispiel dadurch erreicht werden, dass für jeden Lichtpunkt 7xy, 8yx ein Schwerpunkt gebildet wird. Der Abstand D wird dann ins Verhältnis zur Anzahl Pixel 9xy zwischen den Schwerpunkten gesetzt, um das der Kalibrierung zugrunde liegende Verhältnis V zu bestimmen.

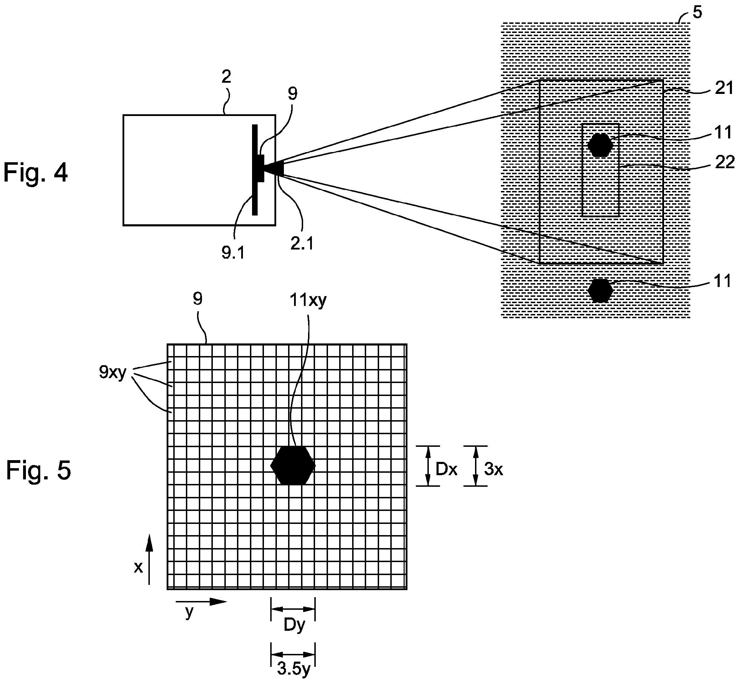

In Fig. 4 wird ein weiteres Ausführungsbeispiel dargestellt, in welchem mittels mindestens eines Objekts 11, hier ein Schraubenkopf 11, ein Referenzmuster erzeugt wird. Aufgrund dieses Schraubenkopfs bzw. einer vorgegebenen Dimension des Schraubenkopfs wird eine Kalibrierung des Sensors 9 bzw. der Pixelgrösse des Sensors 9 vorgenommen. Selbstredend können davon abweichend auch andersartige Objekte verwendet werden.

Die Kamera 2 umfasst hier ein Objektiv 2.1 und einen lichtempfindlichen Sensor 9, die beide in einer Platine 9.1 integriert sind.

Auch in diesem Beispiel ist der Aufnahmebereich 21 der Kamera 2 auf eine Oberflächenstruktur 5 des Schachts 1 gerichtet. Auf der Oberflächenstruktur 5 sind zwei Schraubenköpfe 11 ersichtlich, die beispielsweise Teil eines Befestigungssystems einer Führungsschiene sind. Die Schraubköpfe 11 stellen einerseits Objekte mit einer vorgegebenen Dimension dar, die zur Kalibrierung des Sensors 9 verwendbar sind, andererseits sind die beiden Schraubenköpfe 11 auch Teil der Oberflächenstruktur und stellen selbst eine Struktur dar, die im Rahmen der Positionsermittlung von der Auswerteeinheit ausgewertet werden kann.

Daher kann sich eine Aufteilung des Auswertebereichs 22 in weitere Unterbereiche, wie zuvor in einen Positionsermittlungsbereich erübrigen. Denn ein im Auswertebereich 22 liegender Schraubenkopf 11 erzeugt Bilddaten, die in der Auswerteeinheit 3 gleichzeitig einer Positionsermittlung und einer Kalibrierung zugeführt werden.

In Fig. 5 wird weiter vertieft, wie die Kalibrierung des Ausführungsbeispiels nach Fig. 4 ausgeführt wird. Die Fig. 5 zeigt den Sensor 9 in einer Draufsicht in einer stark vereinfachten Darstellung, ohne Berücksichtigung von Grössenverhältnissen und ungeachtet der zuvor vorgestellten Bereichsunterteilung. Der Fokus liegt im Aufzeigen des grundlegenden Prinzips der Kalibrierung. Der Sensor 9 weist eine Matrix von lichtempfindlichen Pixeln 9xy auf, die sich in die beiden Richtungen x und y erstrecken. Desweiteren ist in Fig. 5 ein Abbild des Schraubenkopfs 11xy auf dem Sensor 9 ersichtlich. Der Schraubenkopf 11xy wird auf dem Sensor 9 als zweidimensionales Objekt dargestellt. Entsprechend besitzt der Schraubenkopf 11xy sowohl in Richtung x als auch in Richtung y je über eine vorgegebene Dimension, nämlich einen Durchmesser Dx und einen Durchmesser Dy. Jeder dieser vorgegebenen Durchmesser Dx, Dy ist der Auswerteeinheit 3 (nicht gezeigt) bekannt und kann für die Kalibrierung verwendet werden. Im gezeigten Beispiel setzt die Auswerteeinheit den Abstand Dx bzw. Dy ins Verhältnis mit der Anzahl Pixel 9xy in den entsprechenden Richtungen x und y. Hier erstrecken sich die beiden Durchmesser Dx, Dy je über 3 bzw. 3.5 Pixel 9xy. Daher ergibt im vorliegenden Beispiel die Kalibrierung ein Verhältnis Vx, Vy zwischen den beiden Durchmessern Dx, Dy und der Anzahl Pixel 9xy, die die beiden Durchmesser Dx, Dy bildweise umsetzt, von

$$Vx = D/3x$$

und

$$Vy = D/3.5y$$

Die eingangs erwähnte Subpixelgenauigkeit kann in diesem Ausführungsbeispiel dadurch erreicht werden, dass zwei gegenüberliegende Kanten des Schraubenkopfs 11xy erkannt werden und deren Abstand bestimmt wird. Der Durchmesser Dx wird dann ins Verhältnis zur Anzahl, der zwischen den beiden Kanten angeordneten Pixel 9xy gesetzt, um das der Kalibrierung zugrunde liegende Verhältnis Vx, Vy zu bestimmen.

Die bei der Skalierung gewonnenen Werte für ein Verhältnis V zwischen der vorgebbaren Dimension D und der Anzahl Pixel 9xy, die diese Dimension D bildweise umsetzen, werden vorzugsweise bei der Ermittlung der Position eingesetzt. So sind der Sensor (9) bzw. die vom Sensor (9) aufgenommenen Bilddaten, die mit einem Referenzbild 6 verglichen werden, kalibrierbar bzw. skalierbar. Dies erleichtert die Zuweisung eines in den Bilddaten vorhandenen Bilds der Oberflächenstruktur 5 zu einem Referenzbild 6, dessen Position in Bezug auf den Schacht 1 bekannt bzw. definiert ist, wesentlich und führt damit zu einer robusten und zuverlässigen Ermittlung einer Position der Aufzugskabine 4.

**Patentansprüche**

1. Positionsermittlungssystem (12) für einen Aufzug (10) mit

   - einer Kamera (2), die an einer Aufzugskabine (4) angeordnet ist, die einen Sensor (9) aufweist mit einer definierten Anzahl von lichtempfindlichen Pixeln (9xy), und die mittels des Sensors (9) Bilddaten einer Oberflächenstruktur (5) von Schachtmaterial, das entlang eines Fahrwegs (F) der Aufzugskabine (4) angeordnet ist, erzeugt und
   - einer Auswerteeinheit (3), die aufgrund der Bilddaten eine Position und/oder Geschwindigkeit der Aufzugskabine (4) ermittelt,

   **dadurch gekennzeichnet, dass**
   das Positionsermittlungssystem (12) dazu ausgelegt ist, ein im Aufnahmebereich (21) der Kamera (2) liegendes Referenzmuster (7.2, 8.2, 11) mit einer vorgegebenen Dimension (D, Dx, Dy) zu erkennen, wobei die Auswerteeinheit (12) aufgrund des Referenzmusters (7.2, 8.2, 11) eine Kalibrierung des Sensors (9) vornimmt.

2. Positionsermittlungssystem (12) nach Anspruch 1, **dadurch gekennzeichnet, dass**
   die Auswerteeinheit (3) für die Kalibrierung des Sensors (9) die vorgegebene Dimension (D, Dx, Dy) des Referenzmusters ins Verhältnis (V, Vx, Vy) zur Anzahl Pixel (9xy), die diese Dimension (D, Dx, Dy) bildweise umsetzt, setzt.

3. Positionsermittlungssystem (12) nach Anspruch 2, **dadurch gekennzeichnet, dass**
   die erzeugten Bilddaten bei der Ermittlung der Position und/oder Geschwindigkeit mittels des aus der Kalibrierung gewonnenen Verhältnisses skalierbar sind.

4. Positionsermittlungssystem (12) nach einem der Ansprüche 1 bis 3,

**dadurch gekennzeichnet, dass**
die Kamera (2) einen einstellbaren Auswertebereich (22) besitzt, in dem Bilddaten aufnehmbar sind, die von der Auswerteeinheit (3) ausgewertet werden, der im Aufnahmebereichs (22) liegt und der insbesondere kleiner einstellbar ist als der Aufnahmebereich (21), wobei das Referenzmuster (7.2, 8.2, 11) innerhalb des Auswertebereichs (22) liegt.

5. Positionsermittlungssystem (12) nach Anspruch 4, **dadurch gekennzeichnet, dass**
   die Kamera (2) einen einstellbaren Positionsermittlungsbereich (23) besitzt, in dem Bilddaten aufnehmbar sind, aufgrund derer die Auswerteeinheit (3) die Position und/oder Geschwindigkeit der Aufzugskabine (4) ermittelt insbesondere mittels eines Vergleichs der erzeugten Bilddaten mit Bilddaten eines einer Position zugewiesenen Referenzbilds (6), der im Auswertebereich (22) liegt und der insbesondere kleiner einstellbar ist als der Auswertebereich (22).

6. Positionsermittlungssystem (12) nach einem der Ansprüche 1 bis 5,
   **dadurch gekennzeichnet, dass**
   das Positionsermittlungssystem (12) eine Lichtquelle (7, 8) umfasst, die ein Referenzmuster (7.2, 8.2) auf der Oberflächenstruktur (5) erzeugt, wobei das Referenzmuster (7.2, 8.2) in einem Aufnahmebereich (21) der Kamera (2) liegt.

7. Positionsermittlungssystem (12) nach Anspruch 6, **dadurch gekennzeichnet, dass**
   das Referenzmuster (7.2, 8.2) mindestens zwei Lichtpunkte (7.2, 8.2) umfasst, die in einer vorgegebenen Dimension (D), insbesondere einem Abstand (D), zueinander auf der Oberflächenstruktur (5) erzeugbar sind, wobei die Auswerteeinheit (3) aufgrund des Abstands (D) der zwei Lichtpunkte (7.2, 8.2) eine Kalibrierung des Sensors (9) vornimmt.

8. Positionsermittlungssystem (12) nach Anspruch 4 in Kombination mit Anspruch 7, **dadurch gekennzeichnet, dass**
   die zwei Lichtpunkte (7.2, 8.2) ausserhalb des Positionsermittlungsbereichs (23) liegen, insbesondere ein oberer Lichtpunkt (7.2) oberhalb des Positionsermittlungsbereichs (23) und ein unterer Lichtpunkt (8.2) unterhalb des Positionsermittlungsbereichs (23) liegt.

9. Positionsermittlungssystem (12) nach Anspruch 7 oder 8,
   **dadurch gekennzeichnet, dass**
   die beiden Lichtpunkte (7.2, 8.2) vertikal versetzt, insbesondere vertikal fluchtend, auf der Oberflächenstruktur (5) erzeugbar sind.

**10.** Positionsermittlungssystem (12) nach einem der Ansprüche 7 bis 9,
**dadurch gekennzeichnet, dass**
die Lichtquelle (7, 8) eine erste Laserdiode (7), die einen ersten Laserstrahl (7.1) emittiert, und eine zweite Laserdiode (8), die einen zweiten Laserstrahl (8.1) emittiert, umfasst, wobei der erste Laserstrahl (7.1) einen ersten Lichtpunkt (7.2) und der zweite Laserstrahl (8.1) einen zweiten Lichtpunkt (8.2) auf der Oberflächenstruktur (5) erzeugen.

**11.** Positionsermittlungssystem (12) nach Anspruch 10,
**dadurch gekennzeichnet, dass**
der erste Laserstrahl (7.1) und der zweite Laserstrahl (8.1) parallel zueinander ausgerichtet sind.

**12.** Positionsermittlungssystem (12) nach einem der Ansprüche 10 oder 11,
**dadurch gekennzeichnet, dass**
die erste und die zweite Laserdiode (7,8), der Sensor (9) und/oder ein Objektiv (2.1) der Kamera (2) auf einer Platine (9.1) integriert sind.

**13.** Positionsermittlungssystem (12) nach einem der Ansprüche 1 bis 5,
**dadurch gekennzeichnet, dass**
das Referenzmuster (11) mittels eines Referenzobjekts (11), das auf der Oberflächenstruktur (5) angeordnet ist, darstellbar ist, wobei das Referenzobjekt (11) zumindest zeitweise im Aufnahmebereich (21) der Kamera (2) liegt.

**14.** Positionsermittlungssystem (12) nach Anspruch 13,
**dadurch gekennzeichnet, dass**
das Referenzobjekt (11) zumindest ein Element ist aus der Gruppe bestehend aus Schraubenkopf (11), Schienenbefestigungselement, und Codemarke.

**15.** Aufzug mit einem Positionsermittlungssystem (12) nach einem der vorhergehenden Ansprüche,
**dadurch gekennzeichnet, dass**
die Auswerteeinheit (3) Positions- und/oder Geschwindigkeitsdaten der Aufzugskabine (4) an eine Aufzugssteuerung (13) übermittelt, wobei die Aufzugssteuerung (13) unter Verwendung der Positions- und/oder Geschwindigkeitsdaten eine Antriebseinheit (14) ansteuert, um die Aufzugskabine (4) zu verfahren.

**Claims**

**1.** A position-determining system (12) for an elevator (10) comprising

- a camera (2), which is arranged on an elevator cab (4) and comprises a sensor (9) comprising a defined number of light-sensitive pixels (9xy), and which produces image data of a surface structure (5) of shaft material, which is arranged along a travel path (F) of the elevator cab (4), by means of the sensor (9), and
- an evaluating unit (3), which determines a position and/or speed of the elevator cab (4) on the basis of the image data,

**characterized in that**
the position-determining system (12) is designed to detect a reference pattern (7.2, 8.2, 11), which lies in the recording range (21) of the camera (2), and which comprises a specified dimension (D, Dx, Dy), wherein the evaluating unit (12) carries out a calibration of the sensor (9) on the basis of the reference pattern (7.2, 8.2, 11).

**2.** The position-determining system (12) according to claim 1,
**characterized in that**
the evaluating unit (3) correlates the dimension (D, Dx, Dy) of the reference pattern specified for the calibration of the sensor (9) with the number of pixels (9xy), which converts this dimension (D, Dx, Dy) on an image by image basis.

**3.** The position-determining system (12) according to claim 2,
**characterized in that**
the produced image data can be scaled in response to the determination of the position and/or speed by means of the ratio obtained from the calibration.

**4.** The position-determining system (12) according to one of claims 1 to 3,
**characterized in that**
the camera (2) has an adjustable evaluating range (22), in which image data, which are evaluated by the evaluating unit (3), can be recorded, and which lies in the recording range (22) and can preferably be adjusted to be smaller than the recording range (21), wherein the reference pattern (7.2, 8.2, 11) lies in the evaluating range (22).

**5.** The position-determining system (12) according to claim 4,
**characterized in that**
the camera (2) has an adjustable position-determining range (23), in which image data can be recorded, on the basis of which the evaluating unit (3) determines the position and/or speed of the elevator cab (4), in particular by comparing the recorded image data with image data of a reference image (6), which is assigned to a position and which lies in the evaluating range (22) and which can in particular be adjusted to be smaller than the evaluating range (22).

**6.** The position-determining system (12) according to one of claims 1 to 5,
**characterized in that**
the position-determining system (12) comprises a light source (7, 8), which produces a reference pattern (7.2, 8.2) on the surface structure (5), wherein the reference pattern (7.2, 8.2) lies in a recording range (21) of the camera (2).

7. The position-determining system (12) according to claim 6,
**characterized in that**
the reference pattern (7.2, 8.2) comprises at least two light points (7.2, 8.2), which can be produced in a specified dimension (D), in particular a distance (D) relative to one another on the surface structure (5), wherein the evaluating unit (3) carries out a calibration of the sensor (9) on the basis of the distance (D) of the two light points (7.2, 8.2).

8. The position-determining system (12) according to claim 4 in combination with claim 7,
**characterized in that**
the two light points (7.2, 8.2) are located outside of the position-determining range (23), in particular an upper light point (7.2) is located above the position-determining range (23) and a lower light point (8.2) is located below the position-determining range 23).

9. The position-determining system (12) according to claim 7 or 8,
**characterized in that**
the two light points (7.2, 8.2) can be produced on the surface structure (5) in a vertically offset, in particular vertically aligned manner.

10. The position-determining system (12) according to one of claims 7 to 9,
**characterized in that**
the light source (7, 8) comprises a first laser diode (7), which emits a first laser beam (7.1), and a second laser diode (8), which emits a second laser beam (8.1), wherein the first laser beam (7.1) generates a first light point (7.2) and the second laser beam (8.1) generates a second light point (8.2) on the surface structure (5).

11. The position-determining system (12) according to claim 10,
**characterized in that**
the first laser beam (7.1) and the second laser beam (8.1) are oriented parallel to one another.

12. The position-determining system (12) according to one of claims 10 or 11,
**characterized in that**
the first and the second laser diode (7, 8), the sensor (9) and/or a lens (2.1) of the camera (2) are integrated on a circuit board (9.1).

13. The position-determining system (12) according to one of claims 1 to 5,
**characterized in that**
the reference pattern (11) can be represented by means of a reference object (11), which is arranged on the surface structure (5), wherein the reference object (11) at least temporarily lies in the recording range (21) of the camera (2).

14. The position-determining system (12) according to claim 13,
**characterized in that**
the reference object (11) is at least one element from the group consisting of screw head (11), rail fastening element, and code mark.

15. An elevator comprising a position-determining system (12) according to one of the preceding claims,
**characterized in that**
the evaluating unit (3) transmits position and/or speed data of the elevator cab (4) to an elevator controller (13), wherein, by using the position and/or speed data, the elevator controller (13) controls a drive unit (14) in order to move the elevator cab (4).

**Revendications**

1. Système de détermination de position (12) pour un ascenseur (10), avec

- une caméra (2), laquelle est disposée sur une cabine d'ascenseur (4), laquelle présente un capteur (9) avec un nombre défini de pixels sensibles à la lumière (9xy) et laquelle génère, au moyen du capteur (9), des données d'image d'une structure de surface (5) d'un matériau de cage qui est disposé le long d'une voie de circulation (F) de la cabine d'ascenseur (4), et
- une unité d'évaluation (3), laquelle détermine, sur la base des données d'image, une position et/ou une vitesse de la cabine d'ascenseur (4),

**caractérisé en ce que**
le système de détermination de position (12) est étudié pour reconnaître un motif de référence (7.2, 8.2, 11), situé dans la zone de prise de vue (21) de la caméra (2), avec une dimension prescrite, dans lequel l'unité d'évaluation (12) effectue un étalonnage du capteur (9) sur la base du motif de référence (7.2, 8.2, 11).

2. Système de détermination de position (12) selon la revendication 1,
**caractérisé en ce que**,
pour l'étalonnage du capteur (9), l'unité d'évaluation (3) met en rapport (V, Vx, Vy) la dimension prescrite (D, Dx, Dy) du motif de référence avec le nombre de pixels (9xy) qui convertit cette dimension (D, Dx, Dy) sous forme d'image.

3. Système de détermination de position (12) selon la revendication 2,
**caractérisé en ce que**
les données d'image générées peuvent être mises à l'échelle lors de la détermination de la position et/ou la vitesse au moyen du rapport obtenu à partir de l'étalonnage.

4. Système de détermination de position (12) selon l'une des revendications 1 à 3,
**caractérisé en ce que**
la caméra (2) possède une zone d'évaluation réglable (22), dans laquelle des données d'image peuvent être enregistrées qui sont évaluées par l'unité d'évaluation (3), laquelle se situe dans la zone de prise de vue (22) et laquelle est en particulier réglable de manière plus petite que la zone de prise de vue (21), dans lequel le motif de référence (7.2, 8.2, 11) se situe dans la zone d'évaluation (22).

5. Système de détermination de position (12) selon la revendication 4,
**caractérisé en ce que**
la caméra (2) possède une zone de détermination de position réglable (23), dans laquelle des données d'image peut être enregistrées sur la base desquelles l'unité d'évaluation (3) détermine la position et/ou vitesse de la cabine d'ascenseur (4) en particulier au moyen d'une comparaison entre les données d'image générées et des données d'image d'une image de référence (6) attribuée à une position, laquelle se situe dans la zone d'évaluation (22) et laquelle est en particulier réglable de manière plus petite que la zone d'évaluation (22).

6. Système de détermination de position (12) selon l'une des revendications 1 à 5,
**caractérisé en ce que**
le système de détermination de position (12) comprend une source lumineuse (7, 8) qui génère un motif de référence (7.2, 8.2) sur la structure de surface (5), dans lequel le motif de référence (7.2, 8.2) se situe dans une zone de prise de vue (21) de la caméra (2).

7. Système de détermination de position (12) selon la revendication 6,
**caractérisé en ce que**
le motif de référence (7.2, 8.2) comprend au moins deux points lumineux (7.2, 8.2) qui peuvent être générés à une dimension prescrite (D), en particulier une distance (D) entre eux, sur la structure de surface (5), dans lequel l'unité d'évaluation (3) procède à un étalonnage du capteur (9) sur la base de la distance (D) des deux points lumineux (7.2, 8.2).

8. Système de détermination de position (12) selon la revendication 4 en combinaison avec la revendication 7,
**caractérisé en ce que**
les deux points lumineux (7.2, 8.2) se situent en-dehors de la zone de détermination de position (23), en particulier un point lumineux supérieur (7.2) se situant au-dessus de la zone de détermination de position (23) et un point lumineux inférieur (8.2) se situant au-dessous de la zone de détermination de position (23).

9. Système de détermination de position (12) selon la revendication 7 ou 8,
**caractérisé en ce que**
les deux points lumineux (7.2, 8.2) peuvent être générés de manière décalée verticalement, en particulier en alignement vertical, sur la structure de surface (5).

10. Système de détermination de position (12) selon l'une des revendications 7 à 9,
**caractérisé en ce que**
la source lumineuse (7, 8) comprend une première diode laser (7) qui émet un premier rayon laser (7.1) et une deuxième diode laser (8) qui émet un deuxième rayon laser (8.1), dans lequel le premier rayon laser (7.1) génère un premier point lumineux (7.2), et le deuxième rayon laser (8.1) génère un deuxième point lumineux (8.2), sur la structure de surface (5).

11. Système de détermination de position (12) selon la revendication 10,
**caractérisé en ce que**
le premier rayon laser (7.1) et le deuxième rayon laser (8.1) sont orientés parallèlement entre eux.

12. Système de détermination de position (12) selon l'une des revendications 10 ou 11,
**caractérisé en ce que**
la première et la deuxième diode laser (7, 8), le capteur (9) et/ou un objectif (2.1) de la caméra (2) sont intégrés sur une platine (9.1).

13. Système de détermination de position (12) selon l'une des revendications 1 à 5,
**caractérisé en ce que**
le motif de référence (11) peut être représenté au moyen d'un objet de référence (11) disposé sur la structure de surface (5), dans lequel l'objet de référence (11) se situe au moins par intermittence dans la zone de prise de vue (21) de la caméra (2).

14. Système de détermination de position (12) selon la revendication 13,
**caractérisé en ce que**
l'objet de référence (11) est au moins un élément du groupe formé par une tête de vis (11), un élément de fixation de rail, et une marque de code.

**15.** Ascenseur avec un système de détermination de position (12) selon l'une des revendications précédentes,
**caractérisé en ce que**
l'unité d'évaluation (3) transmet des données de position et/ou de vitesse de la cabine d'ascenseur (4) à une commande d'ascenseur (13), dans lequel la commande d'ascenseur (13) commande une unité d'entraînement (14) en utilisant les données de position et/ou de vitesse pour déplacer la cabine d'ascenseur (4).

Fig. 1

Fig. 2

Fig. 3

Fig. 4

Fig. 5

EP 3 233 691 B1

**IN DER BESCHREIBUNG AUFGEFÜHRTE DOKUMENTE**

**In der Beschreibung aufgeführte Patentdokumente**

- EP 1232988 A1